# EUROPEAN PATENT SPECIFICATION

(11) **EP 2 942 365 B1**
(45) Date of publication and mention of the grant of the patent: **19.04.2017**
(21) Application number: 14167334.3
(22) Date of filing: 07.05.2014
(51) Int. Cl.: C08J 9/00, C08J 9/04, C08L 19/00, C08L 21/00, C08F 220/06, C08F 220/10, C08J 9/08, C08J 9/10, C08J 9/32, C08L 9/02, C08L 33/06, C08L 33/02

(54) **Expandable elastomers exhibiting alterable stiffness and applications thereof**
Expandierbare Elastomere mit veränderbarer Steifigkeit und Anwendungen davon
Élastomères expansibles présentant une rigidité modifiable et leurs applications

(43) Date of publication of application: 11.11.2015
(73) Proprietor: Kaimann GmbH, 33161 Hövelhof (DE)
(72) Inventor: Kaimann, Georg J., 33161 Hövelhof (DE); Springub, Ralf, 48167 Münster (DE); Weidinger, Jürgen, 33102 Paderborn (DE)
(74) Representative: Hoffmann Eitle

(56) References cited:
- US-A1- 2002 120 024
- US-A1- 2003 078 309
- US-B1- 6 221 928

## Description

### Field of the Invention

The present invention relates to a crosslinkable and expandable elastomer based material wherein its stiffness and/or compressive strength can be altered in a wide range without compromising other properties of the material, the process for manufacturing of such material and the use of such material and its blends and composites.

### Technical Background

Elastomers are known for being flexible and will usually exhibit a low compressive strength compared to thermoplastic or thermoset materials, especially when talking about respective foams. Flexibility is a major advantage of elastomers when it comes to bending or adapting the material to desired shape. On the other hand, the linked compressibility of rubbers and especially rubber foams is not favoured for numerous applications, such as structural insulation, underground and underwater installation, use underneath screed, and so on. In general, elastomers are used for vibration control and damping, but not for load bearing applications.

Up till now, flexibility and resistance versus compression (=compressive strength) has been a combination of properties that could not be matched without compromising the one or the other of elastomers' properties significantly. Therefore, combinations of elastomer (rubber) with rigid structures are used, as in CN 2014/12611 Y, where metal/rubber composites are claimed. However, the rubber part will always be in danger of being irreversibly compressed, being the weaker part of such combinations.

State of the art for improving the compressive strength of elastomeric materials is to increase the elastic modulus (i.e., the response to pressure) by increasing the hardness (measured in Shore® or IRHD). This can be achieved either by higher crosslinking density or by increasing the level of filler, or by combining both methods. In any case, other mechanical properties will be severely affected: tear and tensile strength will drop, and elongation will break down.

As a consequence, highly filled and densely crosslinked rubber parts will become brittle and are easy to disintegrate. At least for tyre manufacturing a mechanism has been found for improving wear resistance and reducing rolling friction (i.e. increasing the felt surface hardness) without too much compromising other properties (like wet grip or tensile) by bounding the rubber to the filler, e.g. by using functional silanes (such as Si69^{©} by Evonik, Germany): there is abundant literature about the topic. Two other approaches for rendering tyres more structurally resistant are 1. grafting rubber polymers with rigid oligomeric or polymeric agents such as in US 5,047,470 A and 2. using e.g. phenolic resins for reinforcement, such as in US 3,474,065 A and US 2009/151844 A1. US 4,250,939 is describing a tyre compound wherein a rubber polymer is reinforced by a thermosetting resin that is sulphur crosslinked. A similar approach is also found in shoe sole applications, such as in CN 102002182 A, where a soft thermoplastic material is reinforced by a resin and then vulcanized by means of peroxides.

In general, softening resins by using rubber polymers is easier than hardening rubber by means of resin reinforcement, as literature shows either; US 6,046,23 A here is one of numerous examples: extremely rigid silicone resin is rendered more flexible by blending it with elastomerics. The explanation behind is rather simple: almost any rubber polymer will act as a softener in thermoplastics and thermosets, as it is amorphous and disturbs the crystallization of the rigid plastics. Plastic resins, however, will usually not increase the crystallinity of crosslinked rubbers even at high dosage, and if they do so the result will be mechanically weak. And finally, even the most rigid and reinforced tyre rubber formulations as described above would fail completely concerning compressive strength and load bearing properties when they would be available as foam, because expandable elastomeric formulations need to be tailored for the processing and application from the outset.

US 2002/120024 discloses a foam cushion formed from a rubber, a crosslinking agent, a blowing agent and a polymeric adhesion modifier. The polymeric adhesion modifier may be FUSABOND A which is a functionalized ethylene-acrylate terpolymer.

### Problem to be solved by the Invention

A major object of the present invention thus is to provide an expandable elastomer material not showing the deficiencies mentioned above but maintaining the flexibility and mechanical properties of rubber and at the same time exhibiting high and alterable compressive strength, allowing the expanded and crosslinked elastomer (rubber) to be used in load bearing applications and to be shaped by milling without surface damages.

### Summary of the Invention

Surprisingly, it is found that such elastomer based expandable material can be achieved by using a primary network formed by elastomeric polymer together with a secondary crosslinking network represented by at least one resinous compound which undergoes condensation or addition crosslinking, optionally co-vulcanising with the elastomeric polymer and/or filler.

Thus, the present invention provides an expandable and crosslinkable elastomeric material, comprising:
(A) at least one elastomeric polymer and a crosslinking system, or at least one thermoplastic elastomer and optionally, a crosslinking system;
(E) an expansion system; and
(F) at least one reactive, crosslinkable resin, which is an oligomer or (co)polymer at least including structural units derived from acrylic acid and/or methacrylic acid or esters thereof, which may optionally have one or more unsaturated double bonds in the main chain or in a side chain thereof, and which preferably has a number average molecular weight of 10³ to 10⁷.

The resin (F) is provided for building up a secondary network within the vulcanizing or readily vulcanized rubber matrix, the secondary network being obtainable by condensation curing and/or ionic or radical induced (poly)addition.

This material can be crosslinking and expanded to a closed or open cell foam, preferably a closed cell foam with a closed cell content of at least 70%.

The thus obtained polymer product is useful for a variety of applications, including thermal and/or acoustic insulation and/or acoustic and/or vibration damping and/or mechanical protection.

### Brief Description of the Drawings

Figure 1 is a schematic view of the presumed composite structure of the material of the present invention.
Figure 2 shows the measured compression response results of the materials of the inventive and comparative examples.

### Detailed Description of the Invention

The claimed material comprises compound (A), which is a rubber polymer, means, an elastomeric or thermoplastic elastomer polymer, such as, but not limited to , AU/EU, BR, BIIR, CIIR, CM/CR, CSM/CSR, (G)(E)CO, EPM/EPDM, EVM, FKM/F(E)PM, GPO, IR, IIR, (F)(P)(V)MQ, (H)NBR, NR, SBR, SAN, SEBS, T or any mixtures thereof. The total weight of all rubber polymers represents a base of 100 parts on which all other ingredients are calculated in phr (parts per hundred parts of rubber polymer).

Preferred elastomeric polymers (A) are such having an unsaturated bond in the backbone and/or the side chain (such as NBR, SBR, EPDM) and/or an active site that can be crosslinked using metal oxides (such as CR) and/or peroxides (such as EVM, CM, VMQ). Especially preferred are elastomeric polymers that can be crosslinked using sulphur based vulcanization systems.

The claimed material may comprise compound (B) which is at least one thermoplastic polymer, such as, but not limited to ABS, PE, PEEK, PEI, PET, PI, PP, PU, PVC, or any mixtures thereof. The thermoplastic polymer can be present in the formulation to a level of 5 to 250 phr.

The claimed material may comprise at least one filler (C) such as, but not limited to inorganic (metal or half metal) chalkogenides, carbonates, halogenides, hydroxides, hydrates, silica, carbon black etc., or any combinations thereof. The filler can be present in the formulation to a level of 5 to 600 phr, preferably 20 to 350 phr.

The claimed material furthermore comprises a crosslinking system (D) for vulcanizing the elastomer (A), such as, but not limited to sulphur based compounds (e.g. sulphur, thiurames, polysulphides, thiocarbamates, thioureas, thiazyls, sulphur-Si-O compounds, chlorothio-compounds etc.), peroxides, silanes, radiation or UV initiated systems, and the like. In case a thermoplastic elastomer is used for the component (A), the crosslinking system is optional.

The claimed material also comprises an expansion system (E), such as, but not limited to azo-compounds, carbonates, interchalate compounds, crystal water compounds, dispersions, expanding microspheres and hollow spheres in general containing expandable gases or liquids, expanding clays and graphite etc., and mixtures thereof.

The claimed material comprises a reactive, i.e. crosslinkable resin (F), which is an oligomer or (co)polymer at least including structural units derived from acrylic acid and/or methacrylic acid (in the following collectively referred to as (meth)acrylic acid) or esters thereof.

The number-average molecular weight of the crosslinkable resin (F) can be within the range of 1000 to 10⁷, preferably 2000 to 5x10⁶, more preferably 3000 to1.5x10⁶, especially preferably 5000 to 10⁶.

The structural units of component (F) include units derived from at least one of (meth)acrylic acid and (meth)acrylic esters. The esters are preferably C₁₋₁₂ alkyl esters such as methyl, ethyl, propyl or butyl esters. Acrylate, ethylacrylate, methacrylate and/or methylmethacrylate are particularly preferable. The content of the units derived from at least one of (meth)acrylic acid and (meth)acrylic esters in the monomer units of component (F) is preferably 40 mol% or more, more preferably 60 mol% or more, even more preferably 80 mol% or more, especially preferably 90 mol% or more, and may be up to 100 mol%.

Optionally, component (F) may contain structural units derived from vinylic or olefininc comonomers such as ethylene, vinyl chloride, vinyl(meth)acrylate, conjugated or nonconjugated dienes with 4 to 20 carbon atoms, maleic anhydride, C₃₋₁₄-alpha-olefins, C₆₋₂₄-arylvinyl (e.g. styrene), C₁₋₁₂-alkoxyvinyl or C₆₋₂₄-aryloxyvinyl. The C₁₋₁₂-alkyl group is preferably a methyl, ethyl, propyl or butyl group. The C₆₋₂₄-aryl group is preferably phenyl, tolyl or naphtyl.

Examples for suitable resins (F) are "Paraloid® EXL 5136" (Dow, U.S.A.), "Fusabond® A560 (DuPont, U.S.A.) and "Elvacite® 2669" (Lucite, U.S.A.).

As apparent, the crosslinkable component (F) contains at least an acid or ester group (COOH/R) and optionally, depending on the (co)monomers, an unsaturated bond in the main chain or a side chain thereof. These moieties act as reactive groups for the crosslinking.

For instance, the crosslinkable component (F) may be of the general formula (a), (b) or (c)

[(R₁)RC-CR(R₂)]₁ (a)

Rₙ(R₁)RC-CR(R₂)- Rₘ (b)

Rₙ(R₁)C=C(R₂)-Rₘ (c)

with 1 indicating a number average polymerization degree of preferably 5-80, with R independently being H or methyl, with Rₙ and Rₘ independently being aliphatic substituents of preferably 1-12 carbon atoms or the remainder of the polymer chain, with R₁ being H or an aliphatic substituent of preferably 1-12 carbon atoms or an aromatic substituent of preferably 6-24 carbon atoms, and with R₂ being -C(R₃)=O, wherein R₃ is OH or OR₄, wherein R₄ is an aliphatic substituent of preferably 1-12 carbon atoms, given the fact that at least one of the substituents R₁, R₂, R₃, R₄ essentially needs to contain an unsaturated bond and/or an ORₓ, group acting as an active crosslinking site. Preferred are the ORₓ groups OH, OMe and OEt.

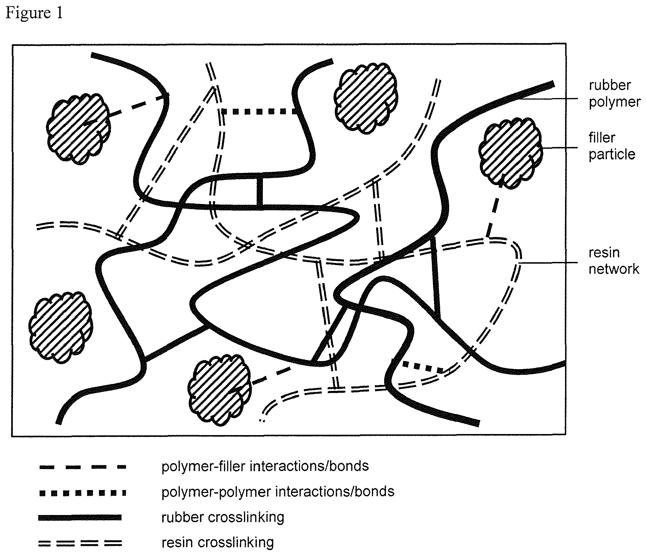

The resin (F) may be present in the formulation from 1 to 100 phr, preferably 3 to 75 phr, especially preferred from 5 to 60 phr.
The resin (F) is intended to build up a secondary network within the vulcanising or readily vulcanised rubber matrix. This network is built up by condensation curing and/or ionic or radical induced (poly)addition. The crosslinked resin may act as standalone network, but preferably is linked to the rubber network and/or the filler particles' surface. The latter would require ORₓ groups, whereas bonding to the elastomeric polymer can be achieved through co-vulcanising unsaturated substituents of the resin. Fig. 1 shows the interpenetration of the rubber polymer and the resin network with possible bonding varieties as described below. The secondary network is rigid by definition, as it is resinous. Depending on the length and character of the aliphatic backbone of compounds of formula (b) and (c) represented by Rₘ and Rₙ a certain flexibility can be obtained, whereas configurations based on [(R₁)RC-CR(R₂)]₁ (a) are of notable stiffness. As a consequence, the "felt hardness" or "stiffness" of the claimed material can be increased by
i) the crosslinking density;
ii) the level of co-vulcanisation between resinous and rubberous network;
iii) the level of condensation between resin and filler;
iv) the total content of resin (F) in the claimed material;
v) the density.

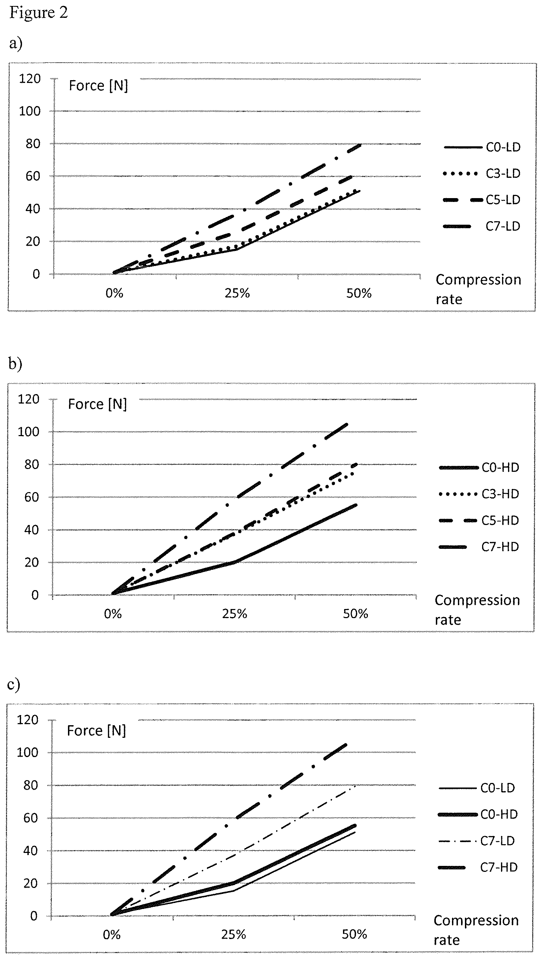

Fig. 2 shows the influence and interaction between resin dosage and density concerning the compressive strength.

The crosslinking of the resin (F) may occur without an external crosslinking agent. Optionally, however, a secondary crosslinking and/or catalyst system (G) can be added, which is initiating and/or accelerating the secondary crosslinking of the resin (F), such as, but not limited to acid or alkali compounds for accelerating polycondensation, phase transfer catalysts (such as emulsifiers, surfactants etc.) for increasing the crosslinking speed and level by providing better availability of the reactive agents, metal and transition metal compounds for catalysis etc., and any mixtures thereof.

The claimed material may comprise further ingredients (H) such as flame retardants and synergists, biocides, plasticizers, stabilizers (e.g. versus heat, UV, ozone, depolymerisation/reversion etc.), colours etc., of any kind in any ratio, including additives for improving its manufacturing, application, aspect and performance properties, such as, but not limited to inhibitors, retarders, accelerators, etc.; and/or additives for adapting it to the applications' needs, such as char-forming and/or intumescent additives, like phosphorous compounds, expanding vermiculite, perlite, graphite, to render the material self-intumescent in case of fire, e.g. for general protection purposes and/or to close and protect e.g. wall and bulkhead penetrations; and/or substances that will lead to a self-ceramifying effect to pipes, wall penetrations etc. in case of fire, such as boron compounds, silicon containing compounds etc.; and/or internal adhesion promoters to ensure self-adhesive properties in co-extrusion and co-lamination applications, such as silicate esters, functional silanes, polyols, etc.; and/or additives that act as internal adhesion promoters to ensure self-adhesive properties in co-extrusion and co-lamination applications, such as silicate esters, functional silanes, polyols etc.

The claimed material may furthermore comprise fibres (I) as long fibres, chopped fibres or pulp as both filler material and reinforcing agent, such as glass fibres, polyaramide fibres, and polyester fibres and so on, and any mixtures thereof.

The claimed material is expanded and crosslinked to a majorly closed or open cell foam, preferably a closed cell foam with a closed cell content of at least 70%, and to a density of less than 300 kg/m³, preferably less than 200 kg/m³, especially preferred less than 150 kg/m³ according to ISO 845, obtaining a thermal conductivity of less than 0.080 W/mK at 0 °C, preferably less than 0.060 W/mK at 0 °C, especially preferred less than 0.050 W/mK at 0 °C according to EN 12667. The resulting water vapour diffusion barrier property is at least 2000, preferably at least 3000, especially preferred at least 5000 according to EN 12086.

The claimed material may be prepared by any conventional procedure such as by mixing the ingredients in an internal mixer or on a roller mill. The required ingredients can be purchased from renowned manufacturers, e.g. some resins as described for (F) (like Fusabond®, DuPont, U.S.A., or Paraloid, Rohm&Haas, The Netherlands), or can be easily obtained by grafting widespread chemicals.

A major advantage of the claimed material is the fact that it can be crosslinked by state-of-the-art, well-examined and economic methods like sulphur curing, and that co-vulcanisation can be controlled by choosing the appropriate vulcanisation system.

Another advantage of the claimed material is the fact that the resins of type (F) are neither critical concerning environmental issues nor concerning interaction with other ingredients of the claimed material.

It is a further advantage of the claimed material that it can be produced and processed in an economic way on equipment as commonly used in the rubber industry, such as for mixing and shaping processes, e.g. by moulding, extrusion and other shaping methods. It shows versatility in possibilities of manufacturing and application. It can be extruded, co-extruded, laminated, moulded, co-moulded etc. as single item or multilayer and thus it can be applied in unrestricted shaping onto various surfaces in automotive, transport, aeronautics, building and construction, furniture, machinery engineering and many other industries.

It is a resulting advantage of the claimed material that it can be transformed and given shape by standard methods being widespread in the industry and that it does not require specialized equipment.

It is another advantage of the claimed material that it can be given shape easily by cutting and milling, e.g. by CNC machines, which is not easily feasible with standard rubbers as they neither would give good surface nor acceptable tolerances due to their compressibility, or even tear.

It is further advantage of the claimed material that its rubber properties, like flexibility, diffusion blocking, water repellence etc. are almost retained even at high levels of dosage of resin (F). Tensile strength and tear resistance will even increase, and a significantly smoother and more resistant surface will be created which facilitates handling, e.g. when pushing respective insulation foam on pipes. The remaining flexibility allows much easier mounting and adaptation to the applications' requirements than for comparably compression resistant rigid foams, such as from thermoplastics and thermosets. The tough surface and the increased tensile/tear or wear properties make the claimed material also ideal for protection purposes, means, protecting sensitive materials from impact, break etc.

An additional advantage of the claimed material compared to standard elastomeric foams is the fact that its vibration or noise damping properties can be modified in a broad range by altering the stiffness.

It is another advantage of the claimed material that it will be able to bear significant load in its vulcanised and expanded state which makes it ideal for use in applications where rigid foams are too brittle and/or too expensive and/or too difficult to apply or adapt, such as in pipe supports, pipe(line) cradles, insulation of underground and underwater installations, insulations and protective applications underneath screed or concrete etc. The use of the claimed material for said applications is therefore claimed, too. Further preferred applications would e.g. be distance heating and industrial insulation.

It is a further advantage of the claimed material that its vulcanised and expanded version is suitable for easy 3D shaping by e.g. milling or cutting, creating a smooth and robust surface. The claimed material therefore is ideal for creating shells for insulating complex structures, such as valves, fittings, T- and L-pieces etc. where there is no space left between the installation and the insulating material; this is a very important feature to prevent condensation of humidity and corrosion under insulation when talking about cold or cryogenic installations. The use of the claimed material for said applications is therefore claimed, too.

### Examples

In the following examples and comparative examples an elastomeric model compound and comparative example C0 was prepared in an internal mixer. For the examples of the claimed material C1-C7 resins F1 and F2 were added to the model compound in the last mixing step. The compositions are shown in table 1. The composition of the model compound C0 is as follows: NBR polymer 95 parts + BR polymer 5 parts = 100 rubber parts; 65 phr (parts per hundred parts of rubber) PVC thermoplast; 170 phr aluminium trihydrate filler; 65 phr long chain chloroparaffin plasticizer; 10 phr epoxydized soy bean oil plasticizer; 100 phr azodicarbonaminde blowing agent. The vulcanisation was carried out by using a ZDBC/ DPTU/sulphur/ZnO system in varying ratio and dosage to obtain different final densities. Sample plates of 25 mm thickness were cut out from sheet material of C0-C7 which was obtained by extruding and vulcanising the compounds on a foam extrusion line. By altering the ingredients of the vulcanisation system as well as the extrusion and vulcanisation oven parameters two different densities - "low density LD" and "high density HD" - have been obtained per compound. LD is approximately 60 kg/m³, whereas HD means approximately 90 kg/m³. The variation in densities is +/-5 points.

**Table 1: examples and comparative example for rubber foam compounds**

| | **C0*** | **C1** | **C2** | **C3** | **C4** | **C5** | **C6** | **C7** |
|---|---|---|---|---|---|---|---|---|
| **F1 [weight%]** | 0 | 0 | 0.5 | 2 | 6 | 8 | 8 | 12 |
| **F2 [weight%]** | 0 | 1 | 1.5 | 2 | 0 | 0 | 2 | 0 |

| | | | | | | | | |
|---|---|---|---|---|---|---|---|---|
| * = comparative example F1 = Paraloid® EXL 5136, Dow, U.S.A.; F2 = Fusabond® A560, DuPont, U.S.A. | | | | | | | | |

The vulcanised and expanded samples were measured to obtain the force/compression relation by compressing the sample plates in a Zwick® Z010 machine with a velocity of 10 mm/min. Table 2 shows the maximum compressive strength values. Fig. 2 shows in diagrams how the compression response can be altered by both resin and density. Comparing fig. 2b and 2c, for example, one can see that an almost identical compressive strength can be reached using two different paths: C5-HD or C7-LD.

**Table 2: compression response (in Newton) of examples and comparative example at high and low densities**

| compression rate/density | **C0*** | **C1** | **C2** | **C3** | **C4** | **C5** | **C6** | **C7** |
|---|---|---|---|---|---|---|---|---|
| **LD 0%** | 1 | 1 | 1 | 1 | 1 | 1 | 1 | 1 |
| **LD 10%** | 6.3 | 5.6 | 7.1 | 7.1 | 10.5 | 14.0 | 15.4 | 24.0 |
| **LD 20%** | 11.5 | 10.1 | 12.3 | 13.2 | 18.1 | 21.3 | 21.4 | 32.1 |
| **LD 50%** | 51.1 | 45.9 | 46.5 | 52.4 | 54.9 | 62.2 | 55.7 | 79.2 |
| **HD 0%** | 1 | 1 | 1 | 1 | 1 | 1 | 1 | 1 |
| **HD 10%** | 9.5 | 8.3 | 13.3 | 22.8 | 23.6 | 26.6 | 32.2 | 48.8 |
| **HD 20%** | 15.7 | 14.8 | 21.8 | 32.2 | 30.7 | 33.7 | 39.7 | 54.1 |
| **HD 50%** | 55.2 | 53.4 | 69.1 | 75.4 | 76.2 | 80.0 | 91.1 | 108.4 |

| | | | | | | | | |
|---|---|---|---|---|---|---|---|---|
| * = comparative example LD/low density = 60 kg/m³; HD/high density = 90 kg/m³ | | | | | | | | |

It can be seen from table 2 that there is even a softening effect at low dosage of F2, as the secondary network is either disturbing the rubber network or as the slowly reacting F2 is insufficiently crosslinked. By increasing the F2 level and/or by adding a more reactive resin F1 the compressive strength is increasing significantly.

## Claims

1. An expandable and crosslinkable elastomeric material, comprising:
(A) at least one elastomeric polymer and a crosslinking system, or at least one thermoplastic elastomer and optionally, a crosslinking system;
(E) an expansion system; and
(F) at least one reactive, crosslinkable resin, which is an oligomer or (co)polymer at least including structural units derived from acrylic acid and/or methacrylic acid or esters thereof, which may optionally have one or more unsaturated double bonds in the main chain or in a side chain thereof, and which preferably has a number average molecular weight of 10³ to 10⁷,
wherein the resin (F) is provided for building up a secondary network within the vulcanizing or readily vulcanized rubber matrix, the secondary network being obtainable by condensation curing and/or ionic or radical induced (poly)addition.

2. The material of claim 1, wherein the resin (F) satisfies the general formula [(R₁)RC-CR(R₂)]₁ and/or Rₙ(R₁)RC-CR(R₂)- Rₘ and/or Rₙ(R₁)C=C(R₂)- Rₘ
with 1 indicating a number average polymerization degree of preferably 5-80;
with R independently being H or methyl,
with Rₙ and Rₘ independently being aliphatic substituents of preferably 1 to 12 carbon atoms or a polymer chain moiety,
with R₁ being H or an aliphatic substituent of preferably 1 to 12 carbon atoms or an aromatic substituent of preferably 6 to 24 carbon atoms,
and with R₂ being -C(R₃)=O, wherein R₃ is OH or OR₄, wherein R₄ is an aliphatic substituent, given the fact that at least one of the substituents R₁, R₂, R₃, R₄ essentially needs to contain an unsaturated bond and/or an ORx, group acting as an active crosslinking site; preferred are the ORx groups OH, OMe and OEt.

3. The material according to claim 1 or 2 wherein the resin (F) may be present in the formulation from 1 to 100 phr, preferably 3 to 75 phr, especially preferred from 5 to 60 phr.

4. The material according to any of claims 1 to 3, which additionally contains fillers (C) at a level of 5 to 600 phr, preferably 20 to 350 phr.

5. Use of an expandable and crosslinkable elastomeric material comprising:
(A) at least one elastomeric polymer and a crosslinking system, or at least one thermoplastic elastomer and optionally, a crosslinking system;
(E) an expansion system; and
(F) at least one reactive, crosslinkable resin, which is an oligomer or (co)polymer at least including structural units derived from acrylic acid and/or methacrylic acid or esters thereof, which may optionally have one or more unsaturated double bonds in the main chain or in a side chain thereof, and which preferably has a number average molecular weight of 10³ to 10⁷,
for the preparation of an elastomer product by crosslinking and expanding the material to a closed or open cell foam, such that the resin (F) is crosslinked to form a secondary network within the rubber matrix.

6. Elastomer product, which is obtainable by crosslinking and expanding the material defined in any of the claims 1 to 4 to a closed or open cell foam, preferably a closed cell foam with a closed cell content of at least 70%, wherein the resin (F) is crosslinked to form a secondary network within the rubber matrix.

7. The elastomer product according to claim 6 which is expanded to a density of less than 300 kg/m³, preferably less than 200 kg/m³, especially preferred less than 150 kg/m³ according to ISO 845, obtaining a thermal conductivity of less than 0.080 W/mK at 0 °C, preferably less than 0.060 W/mK at 0 °C, especially preferred less than 0.050 W/mK at 0 °C according to EN 12667, exhibiting a water vapour diffusion barrier property of at least µ 2000, preferably at least µ 3000, especially preferred at least µ 5000 according to EN 12086.

8. A process for manufacturing the material according to one of claims 1-4 or the elastomer product of claims 6 or 7 in a one-step-mixing process and a one-step-shaping process, preferably shaping in an extrusion process.

9. The use of the elastomer product as defined in any of claims 6 or 7 for thermal and/or acoustic insulation and/or acoustic and/or vibration damping and/or mechanical protection.

10. The use according to claim 9 for applications requiring load bearing as well as thermal and/or acoustic insulation.

11. The use according to claim 9 for the manufacture of pipe supports, pipe hangers and pipe cradles.

12. The use according to claim 9 for the manufacture of three dimensionally structured parts for thermal and/or acoustic insulation and/or mechanical protection purposes by milling and/or cutting.

13. The use according to claim 9 for the manufacture of structural insulation.

14. The use according to claim 9 for the manufacture of insulation shells for valves and fittings.

15. The use according to claim 9 for the thermal and/or acoustic insulation of installations underwater, underground or underneath screed or concrete.

16. The use according to claim 9 for insulating distance heating installations.

## Patentansprüche

1. Expandierbares und vernetzbares Elastomermaterial, umfassend:
(A) mindestens ein elastomeres Polymer und ein Vernetzungssystem, oder mindestens ein thermoplastisches Elastomer und optional ein Vernetzungssystem;
(E) ein Expandiersystem; und
(F) mindestens ein reaktives, vernetzbares Harz, das ein Oligomer oder (Co-)Polymer ist, das mindestens von Acrylsäure und/oder Methacrylsäure oder Estern davon abgeleitete Struktureinheiten enthält, das optional eine oder mehrere ungesättigte Doppelbindungen in der Hauptkette oder in einer Seitenkette davon aufweisen kann und das bevorzugt ein zahlenmittleres Molekulargewicht von 10³ bis 10⁷ aufweist,
wobei das Harz (F) zum Aufbau eines sekundären Netzwerks in der vulkanisierenden oder leicht vulkanisierbaren Elastomermatrix vorgesehen ist, wobei das sekundäre Netzwerk durch Härten durch Kondensation und/oder ionisch oder radikalisch induzierter (Poly-)Addition erhältlich ist.

2. Material gemäß Anspruch 1, wobei das Harz (F) die allgemeine Formel erfüllt:
[(R₁)RC-CR (R₂)]₁ und/oder Rn(R₁)RC-CR(R₂)-Rₘ und/oder Rn(R₁)C=C(R₂)-Rₘ
mit 1, das einen zahlenmittleren Polymerisationsgrad von bevorzugt 5 bis 80 anzeigt;
mit R, das unabhängig voneinander für H oder Methyl steht,
mit Rₙ und Rₘ, die unabhängig voneinander aliphatische Substituenten mit bevorzugt 1 bis 12 Kohlenstoffatomen oder eine Polymerkettengruppe sind,
mit R₁, das H oder ein aliphatischer Substituent mit bevorzugt 1 bis 12 Kohlenstoffatomen oder ein aromatischer Substituent mit bevorzugt 6 bis 24 Kohlenstoffatomen ist,
und mit R₂, das -C(R₃)=O ist, worin R₃ OH oder OR₄ ist, wobei R₄ ein aliphatischer Substituent ist,
vorausgesetzt, dass mindestens einer der Substituenten R₁, R₂, R₃, R₄ notwendigerweise eine ungesättigte Bindung und/oder eine ORₓ-Gruppe enthalten muss, die als aktive Vernetzungsstelle dient; bevorzugt sind die ORₓ-Gruppen OH, OMe und OEt.

3. Material gemäß Anspruch 1 oder 2, wobei das Harz (F) zu 1 bis 100 phr, bevorzugt zu 3 bis 75 phr, besonders bevorzugt zu 5 bis 60 phr, in der Formulierung vorliegt.

4. Material gemäß einem der Ansprüche 1 bis 3, das zusätzlich Füllstoffe (C) in einer Menge von 5 bis 600 phr, bevorzugt 20 bis 350 phr, enthält.

5. Verwendung eines expandierbaren und vernetzbaren Elastomermaterials, umfassend:
(A) mindestens ein elastomeres Polymer und ein Vernetzungssystem, oder mindestens ein thermoplastisches Elastomer und optional ein Vernetzungssystem;
(E) ein Expandiersystem; und
(F) mindestens ein reaktives, vernetzbares Harz, das ein Oligomer oder (Co-)Polymer ist, das mindestens von Acrylsäure und/oder Methacrylsäure oder Estern davon abgeleitete Struktureinheiten enthält, das optional eine oder mehrere ungesättigte Doppelbindungen in der Hauptkette oder in einer Seitenkette davon aufweisen kann und das bevorzugt ein zahlenmittleres Molekulargewicht von 10³ bis 10⁷ aufweist,
zur Herstellung eines Elastomerprodukts durch Vernetzen und Expandieren des Materials zu einem geschlossenzelligen oder offenzelligen Schaum, sodass das Harz (F) vernetzt wird, um ein sekundäres Netzwerk in der Elastomermatrix zu bilden.

6. Elastomerprodukt, erhältlich durch Vernetzen und Expandieren des in einem der Ansprüche 1 bis 4 definierten Materials zu einem geschlossenzelligen oder offenzelligen Schaum, bevorzugt einem geschlossenzelligen Schaum mit einem Gehalt an geschlossenen Zellen von mindestens 70%, wobei das Harz (F) vernetzt wird, um ein sekundäres Netzwerk in der Elastomermatrix zu bilden.

7. Elastomerprodukt gemäß Anspruch 6, das auf eine Dichte von weniger als 300 kg/m³, bevorzugt weniger als 200 kg/m³, besonders bevorzugt weniger als 150 kg/m³, gemäß ISO 845 expandiert ist, wobei eine thermische Leitfähigkeit von weniger als 0,080 W/mK bei 0°C, bevorzugt von weniger als 0,060 W/mK bei 0°C, besonders bevorzugt von weniger als 0,050 W/mK bei 0°C, gemäß EN 12667 erhalten wird, und das eine Wasserdampfdiffusionbarriereeigenschaft von mindestens µ 2000, bevorzugt mindestens µ 3000, besonders bevorzugt mindestens µ 5000, gemäß EN 12086 aufweist.

8. Verfahren zur Herstellung des Materials gemäß einem der Ansprüche 1 bis 4 oder des Elastomerprodukts gemäß Anspruch 6 oder 7 in einem einstufigen Mischverfahren und einem einstufigen Formgebungsverfahren, bevorzugt Formen in einem Extrusionsverfahren.

9. Verwendung des Elastomerprodukts, wie in einem der Ansprüche 6 oder 7 definiert, zur thermischen und/oder akustischen Isolierung und/oder zur akustischen Dämpfung und/oder Vibrationsdämpfung und/oder zum mechanischen Schutz.

10. Verwendung gemäß Anspruch 9 für Anwendungen, die sowohl tragende Eigenschaften als auch eine thermische und/oder akustische Isolierung erfordern.

11. Verwendung gemäß Anspruch 9 zur Herstellung von Rohrstützen, Rohrhalterungen und Rohrwiegen.

12. Verwendung gemäß Anspruch 9 zur Herstellung von dreidimensional strukturierten Teilen zur thermischen und/oder akustischen Isolierung und/oder zu mechanischen Schutzzwecken durch Fräsen und/oder Schneiden.

13. Verwendung gemäß Anspruch 9 zur Herstellung von Strukturisolierungen.

14. Verwendung gemäß Anspruch 9 zur Herstellung von Isolierschalen für Ventile und Armaturen.

15. Verwendung gemäß Anspruch 9 zur thermischen und/oder akustischen Isolierung von Installationen unter Wasser, unterirdischen Installationen oder Installationen unter Estrich oder Beton.

16. Verwendung gemäß Anspruch 9 zur Isolierung von Fernwärmeinstallationen.

## Revendications

1. Matériau élastomère expansible et réticulable comprenant :
(A) au moins un polymère élastomère et un système de réticulation, ou au moins un élastomère thermoplastique et, optionnellement un système de réticulation ;
(E) un système d'expansion ; et
(F) au moins une résine réactive, réticulable, qui consiste en un oligomère ou un (co)polymère comportant au moins des unités structurelles dérivées d'acide acrylique et/ou d'acide méthacrylique ou d'esters de ceux-ci, pouvant optionnellement posséder une ou plusieurs liaisons doubles insaturées dans la chaîne principale ou dans une chaîne latérale de celle-ci, et qui de préférence présente un poids moléculaire moyen en nombre compris entre 10³ et 10⁷,
dans lequel la résine (F) est destinée à former un réseau secondaire à l'intérieur d'une matrice de caoutchouc de vulcanisation ou facilement vulcanisée, le réseau secondaire pouvant être obtenu par durcissement par condensation et/ou par (poly)addition induite ionique ou radicalaire.

2. Matériau selon la revendication 1, dans lequel la résine (F) satisfait la formule générale [(R₁)RC-CR(R₂)]₁ et/ou Rₙ(R₁)RC-CR(R₂)-Rₘ et/ou Rₙ(R₁)C=C(R₂)-Rₘ avec 1 indiquant un degré de polymérisation moyen en nombre de préférence compris de 5 à 80 ;
avec R consistant indépendamment en H ou un groupe méthyle,
avec Rₙ et Rₘ consistant indépendamment en des substituants aliphatiques ayant de préférence de 1 à 12 atomes de carbone ou un fragment à chaîne polymère, avec R₁ consistant en H ou un substituant aliphatique ayant de préférence de 1 à 12 atomes de carbone ou un substituant aromatique ayant de préférence de 6 à 24 atomes de carbone,
et avec R₂ consistant en -C(R₃)=O, dans lequel R₃ consiste en OH ou OR₄, dans lequel R₄ consiste en un substituant aliphatique, étant considéré qu'au moins un des substituants R₁, R₂, R₃, R₄ doit essentiellement contenir une liaison insaturée et/ou un ORx, un groupe agissant en tant que site de réticulation actif; de préférence consistant en des groupes ORx OH, OMe et OEt.

3. Matériau selon la revendication 1 ou 2 dans lequel la résine (F) peut être présente dans la formulation pour 1 à 100 phr, de préférence 3 à 75 phr, de façon encore plus préférée 5 à 60 phr.

4. Matériau selon l'une des revendications 1 à 3, qui contient également des charges (C) à un niveau compris de 5 à 600 phr, de préférence de 20 à 350 phr.

5. Utilisation d'un matériau élastomère expansible et réticulable comprenant :
(A) au moins un polymère élastomère et un système de réticulation, ou au moins un élastomère thermoplastique et optionnellement, un système de réticulation ;
(E) un système d'expansion ; et
(F) au moins une résine réactive réticulable qui consiste en un oligomère ou un (co)polymère comportant au moins des unités structurelles dérivées d'acide acrylique et/ou d'acide méthacrylique ou d'esters de ceux-ci, pouvant optionnellement avoir une ou plusieurs liaisons doubles insaturées dans la chaîne principale ou dans une chaîne latérale de celle-ci, et qui de préférence présente un poids moléculaire moyen en nombre compris de 10³ à 10⁷,
pour la préparation d'un produit élastomère par réticulation et expansion du matériau en une mousse à cellules fermées ou ouvertes, de telle sorte que la résine (F) est réticulée pour former un réseau secondaire à l'intérieur de la matrice de caoutchouc.

6. Produit élastomère, qui peut être obtenu par réticulation et expansion du matériau défini selon l'une des revendications 1 à 4 en une mousse à cellules fermées ou ouvertes, de préférence en une mousse à cellules fermées avec une teneur en cellules fermées d'au moins 70 %, dans lequel la résine (F) est réticulée pour former un réseau secondaire à l'intérieur de la matrice de caoutchouc.

7. Produit élastomère selon la revendication 6 qui est expansé à une densité inférieure à 300 kg/m³, de préférence inférieure à 200 kg/m³, de façon encore plus préférée inférieure à 150 kg/m³ selon la norme ISO 845, en obtenant une conductivité thermique inférieure à 0,080 W/mK à 0 °C, de préférence inférieure à 0,060 W/mK à 0 °C, de façon encore plus préférée inférieure à 0,050 W/mK à 0°C selon la norme EN 12667, présentant une propriété de barrière à la diffusion de vapeur d'eau d'au moins µ 2000, de préférence d'au moins µ 3000, de façon encore plus préférée d'au moins µ 5000 selon la norme EN 12086.

8. Procédé de fabrication du matériau selon l'une des revendications 1 à 4 ou du produit élastomère selon la revendication 6 ou 7 dans un processus de mélange en une étape et un processus de formage en une étape, de préférence de formage dans un processus d'extrusion.

9. Utilisation du produit élastomère selon l'une des revendications 6 ou 7 pour l'isolation thermique et/ou acoustique et/ou l'atténuation acoustique et/ou des vibrations et/ou la protection mécanique.

10. Utilisation selon la revendication 9 pour des applications exigeant un support de charge aussi bien qu'une isolation thermique et/ou acoustique.

11. Utilisation selon la revendication 9 pour la fabrication de porte-tubes, de porte- tuyaux et d'arceaux de tuyaux.

12. Utilisation selon la revendication 9 pour la fabrication de parties structurées en trois dimensions pour de l'isolation thermique et/ou acoustique et/ou à des fins de protection mécanique par broyage et/ou par découpage.

13. Utilisation selon la revendication 9 pour la fabrication d'isolation structurelle.

14. Utilisation selon la revendication 9 pour la fabrication de coques isolantes pour des valves et des raccords.

15. Utilisation selon la revendication 9 pour l'isolation thermique et/ou acoustique d'installations sous les eaux, sous la terre ou sous une chape ou du béton.

16. Utilisation selon la revendication 9 pour l'isolation d'installations de chauffage à distance.
